# EUROPEAN PATENT APPLICATION

(11) **EP 1 830 500 A1**
(43) Date of publication of application: **05.09.2007**
(21) Application number: 06004227.2
(22) Date of filing: 02.03.2006
(51) Int. Cl.: H04J 3/06, H04Q 7/18

(54) **Time division multiplexing synchronisation apparatus, radio communication apparatus and synchronisation method in time division multiplex communication**

(71) Applicant: MATSUSHITA ELECTRIC INDUSTRIAL CO., LTD, Kadoma-shi, Osaka 571-8501 (JP)
(72) Inventor: Hagiwara, Yasunori, Machida-shi, Tokyo 195-0072 (JP)
(74) Representative: Grünecker, Kinkeldey, Stockmair & Schwanhäusser Anwaltssozietät

(57) **Abstract**

A time division multiplexing synchronization apparatus, radio communication apparatus, and synchronization method in time division multiplex communication that enable power savings to be achieved and synchronization to be performed dependably with a signal from the intended station. From the start of communication until a slot containing frame information can be confirmed, data reception is performed only for a fixed time each time the UW of a slot is detected, and data reception is not performed in other periods. By this means power consumption can be reduced, and since unwanted synchronization is not performed for a disturbing wave of another station or the like, synchronization can be maintained dependably.

## Description

### BACKGROUND OF THE INVENTION

### 1. Field of the Invention

The present invention relates to a time division multiplexing synchronization apparatus, radio communication apparatus, and synchronization method in time division multiplex communication.

### 2. Description of the Related Art

In recent years, the use of radio communication apparatuses that perform time division multiplex communication has become increasingly widespread in order to make effective use of spectrum and perform highly efficient data transfer. For such conventional radio communication apparatuses, apparatuses have been proposed that employ a method whereby, when a plurality of slots are used, synchronization is performed based on a received unique word (UW) or suchlike synchronization signal (see, for example, Unexamined Japanese Patent Publication No.HEI 6-141009).

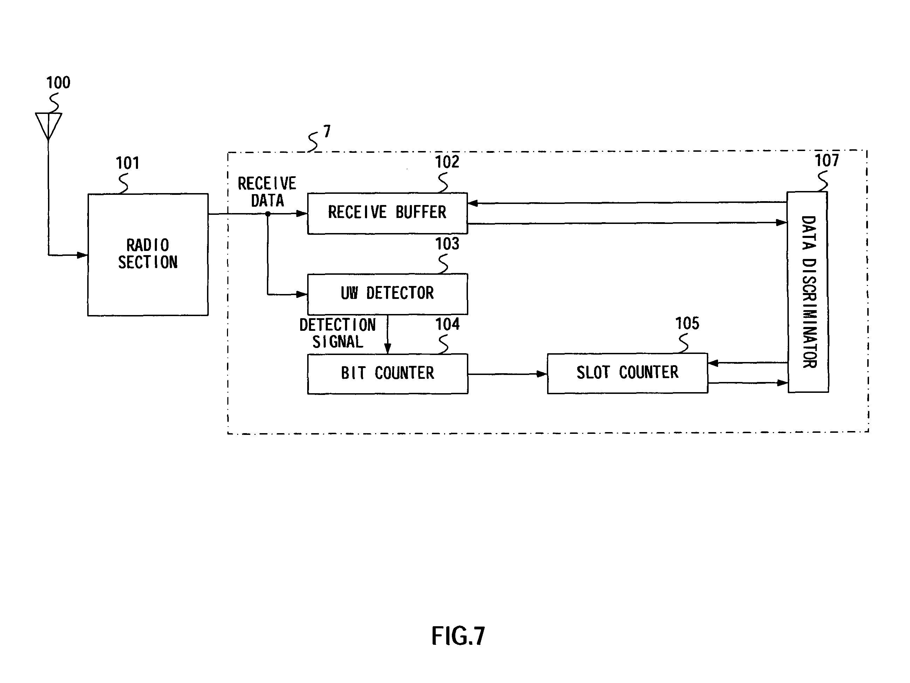

A time division multiplexing synchronization apparatus used by a conventional time division multiplex communication system radio communication apparatus will be described. FIG.7 is a block diagram showing the configuration of a conventional time division multiplexing synchronization apparatus. Time division multiplexing synchronization apparatus 7 shown in FIG.7 is composed of receive buffer 102, UW detector 103, bit counter 104, slot counter 105, and data discriminator 107.

In this time division multiplexing synchronization apparatus 7, if frequency information cannot be detected immediately after powering-on, for example, receive data from radio section 101 is successively stored in receive buffer 102 and a UW between slots is detected by UW detector 103. When a UW is detected in the receive data, bit counter 104, which counts in 1-slot cycles, is set and slot synchronization is performed. Then, in data discriminator 107, CRC (Cyclic Redundancy Check) confirmation is performed from the receive data stored in receive buffer 102, and if there is frame information, necessary slot-by-slot reception is performed based on that frame information.

After frame information has been confirmed, UW detector 103 detects a UW at the timing that is originally supposed to apply. Bit counter 104 generates overflow at the end of a slot, and the overflow signal at this time is input to slot counter 105, which counts in 1-frame cycles, indicating that the next slot has been reached.

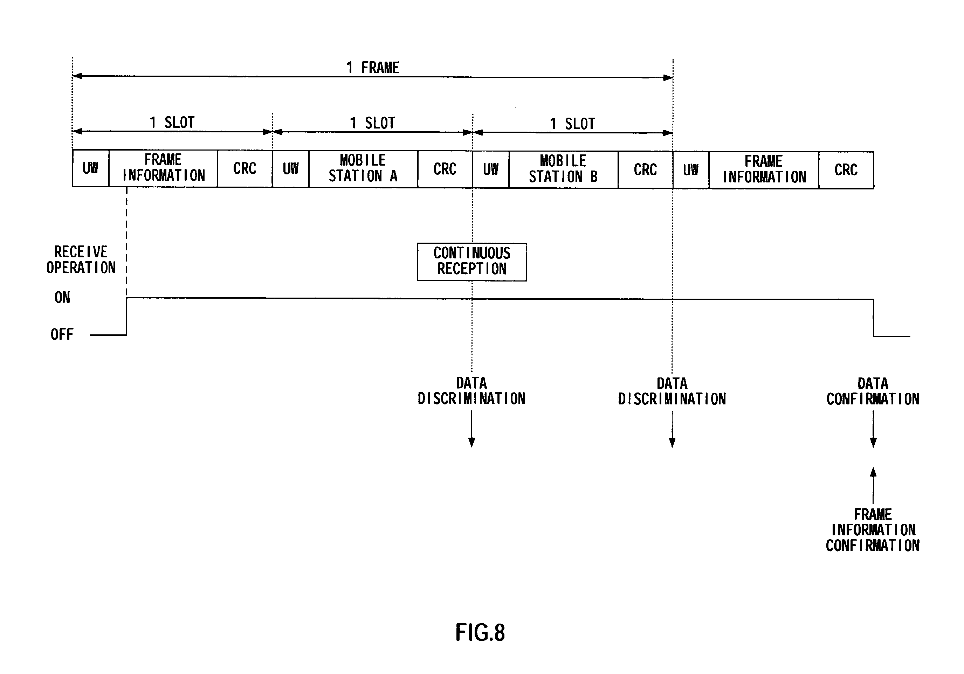

FIG.8 is a drawing showing a data configuration and receive operation used in time division multiplex communication. As an example, three slots are multiplexed in one frame, with frame information assigned to the first slot, mobile station A to the second slot, and mobile station B to the third slot. In this example, receive operation starts partway through the first slot, and frame information causes a CRC error as incomplete data. Although the second slot onward can be received normally, as there is no frame information, reception of the next slot is performed. Reception is continued in this way until a slot containing frame information is received, and when a slot containing frame information can be received, receive operation is subsequently performed only for necessary slots.

However, a problem with a conventional time division multiplexing synchronization apparatus is that, since slots must be continuously received and data analysis performed until a slot containing frame information is received and the frame configuration can be comprehended, receive operation must be performed continuously until completion of reception of a slot containing frame information, during which time power is consumed, and there is also a risk of synchronizing with a signal from another station.

### SUMMARY OF THE INVENTION

It is an object of the present invention to provide a time division multiplexing synchronization apparatus, radio communication apparatus, and synchronization method in time division multiplex communication that enable power savings to be achieved and synchronization to be performed dependably with a signal from the intended station.

According to an aspect of the invention, a time division multiplexing synchronization apparatus used in time division multiplex communication in which the slot length and frame length are fixed has: a synchronization signal detection section that detects a synchronization signal contained in a received signal; and a synchronization section that performs continuous receive operation from the start of communication until a synchronization signal is first obtained, and when a synchronization signal is first obtained, performs slot-by-slot synchronization based on that synchronization signal, and from the next slot onward until frame information is obtained, performs receive operation only for a time in which it is possible to confirm the aforementioned frame information on a slot-by-slot basis, and halts receive operation in other periods.

According to another aspect of the invention, a radio communication apparatus is equipped with the above-described time division multiplexing synchronization apparatus.

According to another aspect of the invention, a time division multiplexing synchronization apparatus used in time division multiplex communication in which the slot length and frame length are variable has: a field strength measuring section that measures a field strength signal and determines the strength of a received signal; a synchronization signal detection section that detects a synchronization signal contained in a received signal; and a synchronization section that performs continuous receive operation from the start of communication until a synchronization signal is first obtained, and when a synchronization signal is first obtained, performs slot-by-slot synchronization based on that synchronization signal, and from the next slot onward until frame information is obtained, performs receive operation only for a time in which it is possible to confirm the aforementioned frame information on a slot-by-slot basis, and halts receive operation in other periods and at the time of an empty slot that can be confirmed from the determination result of the aforementioned field strength measuring section.

According to another aspect of the invention, a radio communication apparatus is equipped with the above-described time division multiplexing synchronization apparatus.

According to another aspect of the invention, in a synchronization method in time division multiplex communication in which the slot length and frame length are fixed, intermittent receive operation is performed at the time of frame information reception, and synchronization is performed in a receive operation period.

According to another aspect of the invention, in a synchronization method in time division multiplex communication in which the slot length and frame length are fixed, in the period from the start of communication until reception of frame information continuous receive operation is performed until a synchronization signal is first obtained, and when a synchronization signal is first obtained, slot-by-slot synchronization is performed based on that synchronization signal, and from the next slot onward until frame information is obtained, receive operation is performed only for a time in which it is possible to confirm the aforementioned frame information on a slot-by-slot basis, and receive operation is halted in other periods.

According to another aspect of the invention, in a synchronization method in time division multiplex communication in which the slot length and frame length are variable, an empty slot is confirmed by measuring the field strength, intermittent receive operation is performed at the time of frame information reception and synchronization is performed in that receive operation period, and after synchronization is performed, receive operation is halted at the time of an empty slot.

According to still another aspect of the invention, in a synchronization method in time division multiplex communication in which the slot length and frame length are variable, an empty slot is confirmed by measuring the field strength, and in the period from the start of communication until reception of frame information, continuous receive operation is performed until a synchronization signal is first obtained, and when a synchronization signal is first obtained, slot-by-slot synchronization is performed based on that synchronization signal, and from the next slot onward until frame information is obtained, receive operation is performed only for a time in which it is possible to confirm the aforementioned frame information on a slot-by-slot basis, and receive operation is halted in other periods and at the time of an empty slot.

### BRIEF DESCRIPTION OF THE DRAWINGS

The above and other objects and features of the invention will appear more fully hereinafter from a consideration of the following description taken in conjunction with the accompanying drawing wherein one example is illustrated by way of example, in which:
FIG.1 is a block diagram showing the configuration of the receiving side of a radio communication apparatus according to Embodiment 1 of the present invention;
FIG.2 is a drawing showing receive timing in a radio communication apparatus according to Embodiment 1;
FIG.3 is a block diagram showing the configuration of the receiving side of a radio communication apparatus according to Embodiment 2 of the present invention;
FIG.4 is a block diagram showing the configuration of the receiving side of a radio communication apparatus according to Embodiment 3 of the present invention;
FIG.5 is a drawing showing receive timing in a radio communication apparatus according to Embodiment 3;
FIG. 6 is a block diagram showing the configuration of the receiving side of a radio communication apparatus according to Embodiment 4 of the present invention;
FIG.7 is a block diagram showing the configuration of the receiving side of a conventional radio communication apparatus; and
FIG.8 is a drawing showing receive timing in a conventional radio communication apparatus.

### DESCRIPTION OF THE PREFERRED EMBODIMENTS

With reference now to the accompanying drawings, embodiments of the present invention will be explained in detail below.

### (Embodiment 1)

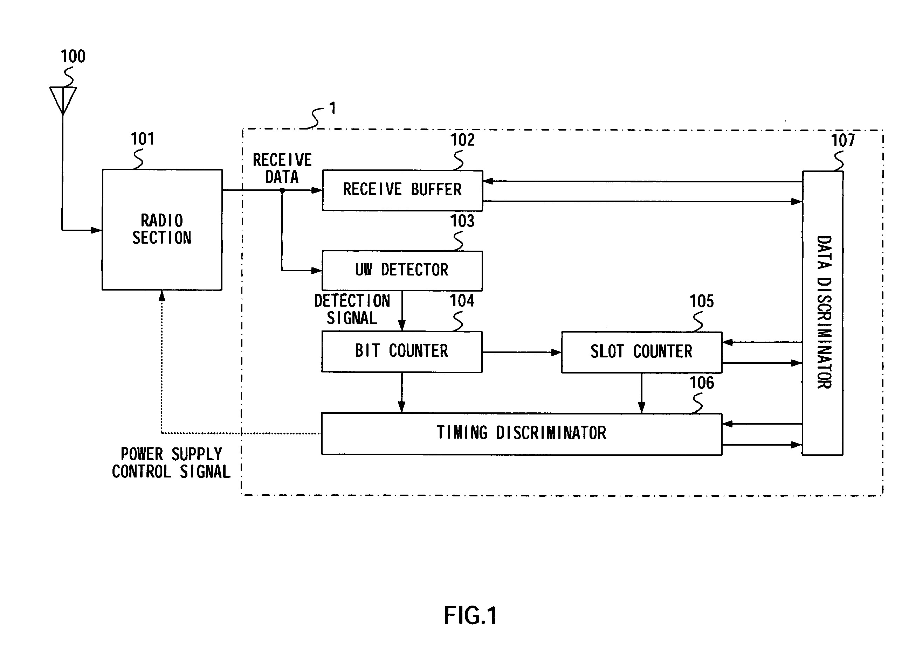

FIG.1 is a block diagram showing the configuration of the receiving side of a radio communication apparatus according to Embodiment 1 of the present invention. Parts in FIG.1 identical in configuration to those in FIG.7 are assigned the same codes as in FIG.7 and descriptions thereof are omitted.

A radio communication apparatus according to this embodiment performs communication by means of a time division multiplex communication method, and comprises radio section 101 and time division multiplexing synchronization apparatus 1. Time division multiplexing synchronization apparatus 1 has receive buffer 102, UW (unique word) detector 103, bit counter 104, slot counter 105, timing discriminator 106, and data discriminator 107.

UW detector 103 corresponds to a synchronization signal detection section. Receive buffer 102, bit counter 104, slot counter 105, timing discriminator 106, and data discriminator 107 make up a synchronization section.

Radio section 101 down-converts a time division multiplexed received signal received by an antenna 100 from radio frequency to baseband frequency, and also performs demodulation and so forth and inputs the resulting signal to receive buffer 102 and UW detector 103. Receive buffer 102 temporarily stores a signal input from radio section 101. As described later herein, a received signal stored in receive buffer 102 is read by data discriminator 107. UW detector 103 detects a UW in a slot from a received signal input from radio section 101, and inputs a receive timing detection signal (the receive timing being the timing at that time) to bit counter 104. A UW (unique word) is a bit sequence comprising a unique predetermined number of bits that is different for each mobile station and is known between the base station apparatus and the respective mobile station.

Bit counter 104 is incremented by 1 each time a 1-bit received signal is input. It then overflows at one slot and inputs the overflow signal at that time to slot counter 105. Bit counter 104 inputs an overflow signal to slot counter 105 each time it overflows, and also resets itself each time it overflows.

Slot counter 105 is incremented by 1 when an overflow signal is input from bit counter 104. That is to say, slot counter 105 is incremented by 1 every slot. Slot counter 105 then overflows at one frame, and resets itself at this time. That is to say, slot counter 105 resets itself each time it overflows.
Timing discriminator 106 estimates the receive data location of the present slot from the count value of bit counter 104, and inputs a data discrimination timing signal to data discriminator 107. Timing discriminator 106 also determines whether data reception is necessary or unnecessary based on a data discrimination result signal input from data discriminator 107 and the receive data location of the present slot estimated from the count value from bit counter 104, and if data reception is unnecessary, performs power supply control of an unnecessary function and halts that function.

Based on the data discrimination timing signal input from timing discriminator 106, data discriminator 107 discriminates the contents of receive buffer 102, determines whether or not there is frame information in the receive data and inputs the result to timing discriminator 106 as a data discrimination result signal, and if there is no frame information, sends a directive to timing discriminator 106 so as to halt the function until just before the UW of the next slot is received by means of data discriminator 107. In this embodiment, in order to start communication, continuous receive operation is carried out to perform UW detection and achieve slot synchronization, and from the point at which synchronization is achieved until a slot containing frame information is obtained, data reception is performed for only a fixed time each time the UW of a slot is detected, and data reception is not performed in other periods.

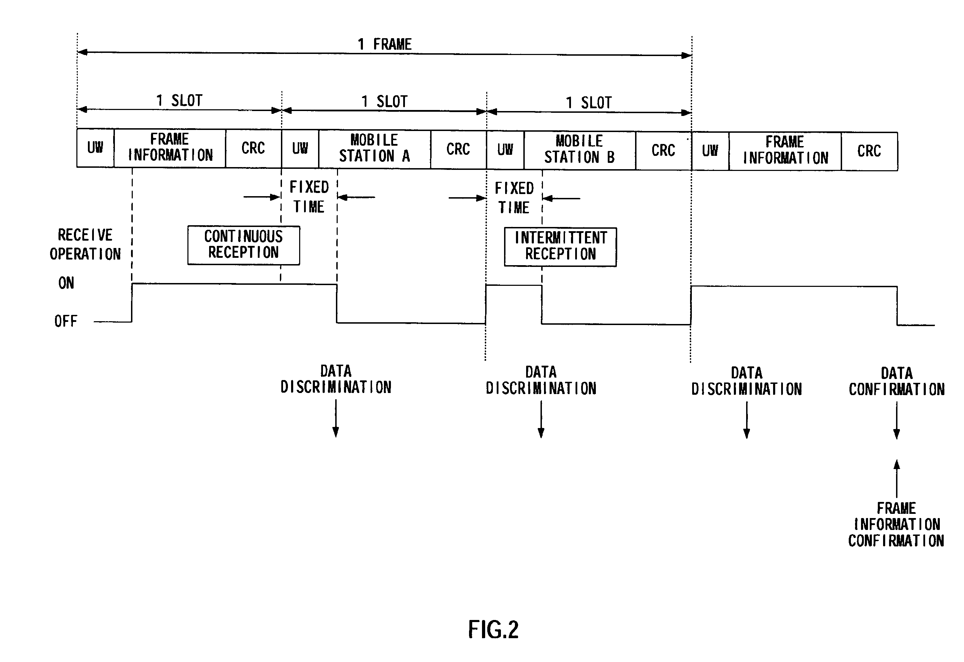

The timing of the above receive operation and time division multiplex communication data will now be described using the accompanying drawings. FIG.2 is a drawing showing receive timing in a radio communication apparatus according to this embodiment. In FIG.2, in order to check the frame configuration and start communication, the radio communication apparatus first performs UW detection, and performs continuous receive operation in order to achieve slot synchronization. In the example in FIG.2, since communication has already ended for the UW and part of the frame information of the first slot at this time, the data of the first slot cannot be completely received, and processing moves on to the next slot.
Next, a UW is first detected and slot synchronization performed in the second slot following the slot in which receive operation was started, and reception is performed for a known fixed time from that point, after which data discrimination is performed. The result of data discrimination is that the slot whose UW has been detected at the present time is a mobile station A slot, and frame information cannot be received. Thus, data discriminator 107 directs timing discriminator 106 to halt receive operation until just before the UW of the next slot is received, and in accordance with this directive timing discriminator 106 inputs a power supply control signal to radio section 101 and halts operation of radio section 101. That is to say, provision is made for data reception not to be performed.

Next, power supply control signal input to radio section 101 is halted just before the UW of the third slot, as a result of which power is supplied to radio section 101 and receive operation is started. When receive operation is started, the UW is detected and slot synchronization is performed again. Reception is then performed for a known fixed time from that point. After reception has been performed for the known fixed time, data discrimination is performed again. The result of data discrimination is that the slot whose UW has been detected at the present time is a mobile station B slot, and frame information cannot be received. Thus, data discriminator 107 directs timing discriminator 106 to halt receive operation until just before the UW of the next slot is received, and in accordance with this directive timing discriminator 106 inputs a power supply control signal to radio section 101 and halts operation of radio section 101. That is to say, provision is made for data reception not to be performed.

Next, power supply control signal input to radio section 101 is halted just before the UW of the fourth slot, as a result of which power is supplied to radio section 101 and receive operation is started. When receive operation is started, the UW is detected and slot synchronization is performed again. Reception is then performed for a known fixed time from that point.
Immediately after reception has been performed for the known fixed time, data discrimination is performed again. As a result of data discrimination the slot whose UW has been detected at the present time is identified as a slot containing frame information, and timing discriminator 106 determines that reception is to be continued, temporarily suspends power supply control, and performs continuous reception. When reception of the data in this fourth slot is completed and the frame information has been comprehended, timing discriminator 106 executes power supply control in accordance with bit counter 104 and slot counter 105 timing so that only reception of the necessary slot data is performed.

Thus, according to a radio communication apparatus of this embodiment, frame information is not received by means of continuous reception, but the frame configuration is predicted to some extent before frame information is received and reception is performed only for the necessary part, as a result of which power consumption can be reduced and unwanted synchronization is not performed for a disturbing wave from another station or the like, enabling synchronization to be maintained dependably.

### (Embodiment 2)

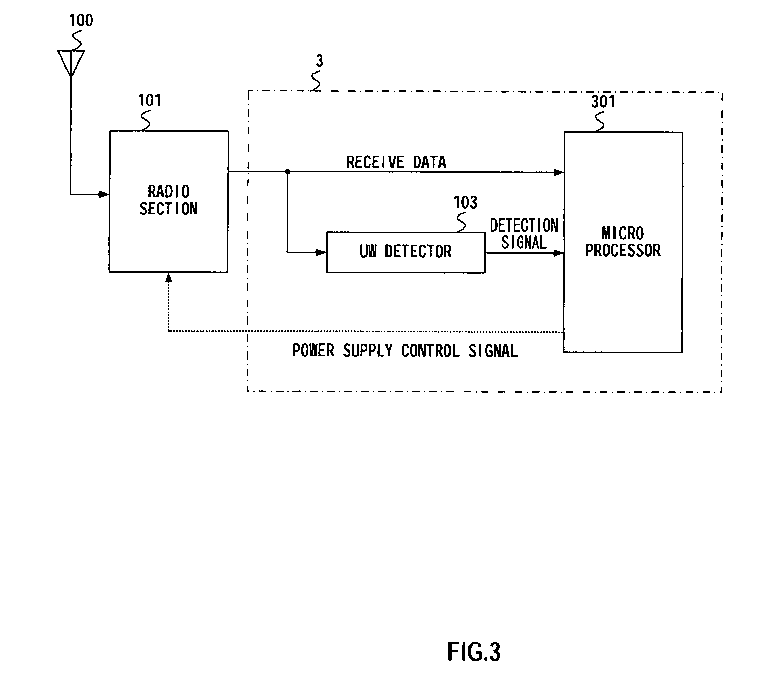

FIG.3 is a block diagram showing the configuration of the receiving side of a radio communication apparatus according to Embodiment 2 of the present invention. Parts in FIG. 3 identical in configuration to those in FIG.7 are assigned the same codes as in FIG.7 and descriptions thereof are omitted.

A radio communication apparatus according to this embodiment performs communication by means of a time division multiplex communication method, and comprises a radio section 101 and a time division multiplexing synchronization apparatus 3. Time division multiplexing synchronization apparatus 3 has UW detector 103 and microprocessor 301. Microprocessor (synchronization section) 301 has functions equivalent to the respective functions of receive buffer 102, bit counter 104, slot counter 105, timing discriminator 106, and data discriminator 107 provided in time division multiplexing synchronization apparatus 1 shown in FIG.1. That is to say, microprocessor 301 has a functionof storing data insteadof receive buffer 102, a function of measuring timing instead of bit counter 104 and slot counter 105, and a function of discriminating data location and data contents instead of timing discriminator 106 and data discriminator 107. These functions are programmed and written into internal memory or external memory of microprocessor 301.

Microprocessor 301 stores receive data output from radio section 101, and performs slot synchronization with a UW detection signal from UW detector 103 as a trigger. A timer is operated that is incremented by 1 each time a 1-bit received signal is input, and based on the value of this timer the contents of stored receive data are determined at a point in time at which reception has been completed to a certain extent, and continuous reception is performed if there is frame information, but if there is no frame information reception is suspended at that point, and operation is halted and the power supply controlled until just before the UW of the next slot. UW detector 103 can easily be envisaged as being able to be replaced by receive buffer operations by microprocessor 301, and eliminated.

Thus, according to a radio communication apparatus of this embodiment, frame information is not received by means of continuous reception, but the frame configuration is predicted to some extent before frame information is received and reception is performed only for the necessary part, as a result of which power consumption can be reduced and unwanted synchronization is not performed for a disturbing wave from another station or the like, enabling synchronization to be maintained dependably.

Also, fewer component parts are necessary than in the case of the above-described radio communication apparatus of Embodiment 1, enabling the body of the apparatus to be made smaller and lighter.

### (Embodiment 3)

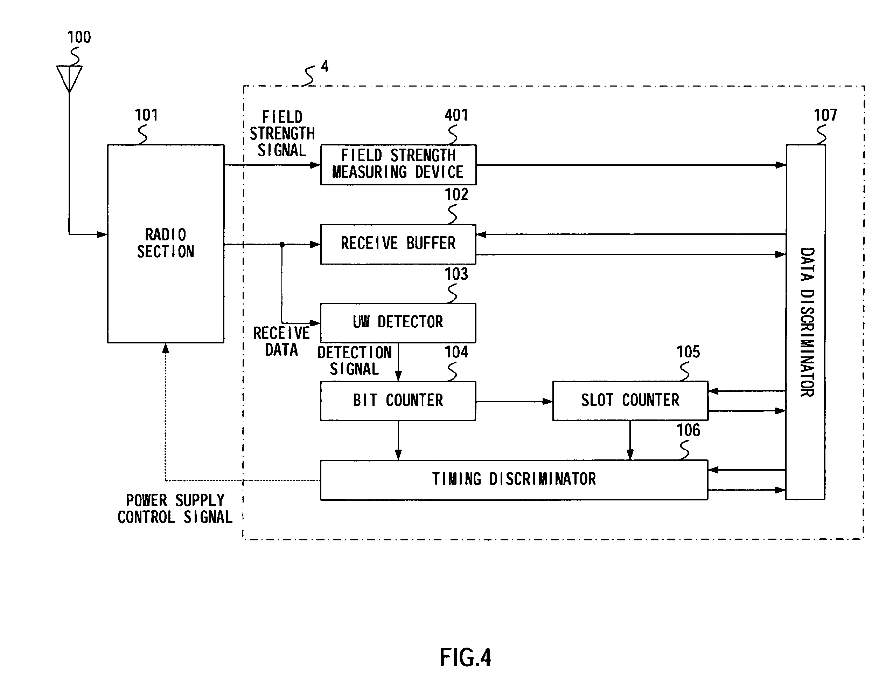

FIG.4 is a block diagram showing the configuration of the receiving side of a radio communication apparatus according to Embodiment 3. Parts in FIG.4 having the same function as in the radio communication apparatus according to Embodiment 1 shown in FIG.1 are assigned the same codes as in FIG.1.

radio communication apparatus according to this embodiment performs communication by means of a time division multiplex communication method, and comprises radio section 101 and time division multiplexing synchronization apparatus 4, having field strength measuring device 401 in addition to the same configuration elements as the above-described radio communication apparatus according to Embodiment 1 shown in FIG. 1. Field strength measuring device (field strength measuring section) 401 measures a field strength signal from radio section 101, determines the strength of the signal, and reports this to data discriminator 107. In addition to issuing a directive to timing discriminator 106, data discriminator 107 also determines the status of slot data from the measurement result of field strength measuring device 401, and if there is no signal, issues a directive to timing discriminator 106 to halt data reception until the next timing.

The above receive operation and time division multiplex communication data timing when the slot length and frame length are variable will now be described using the accompanying drawings.

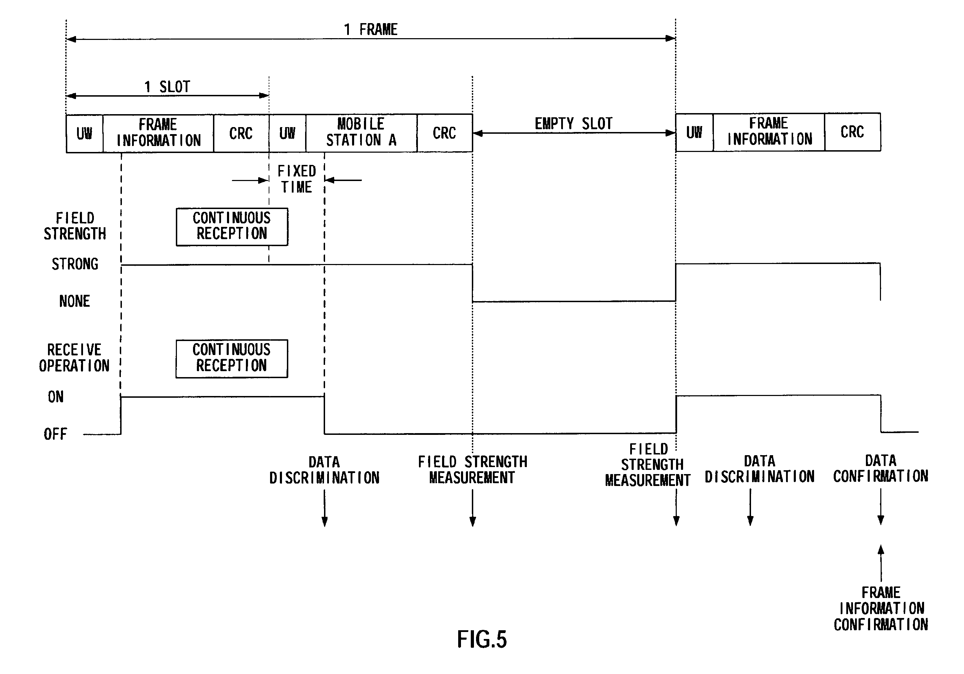

FIG.5 is a drawing showing receive timing in a radio communication apparatus according to this embodiment. In FIG.5, in order to check the frame configuration and start communication, the radio communication apparatus performs UW detection, and performs continuous receive operation in order to achieve slot synchronization. In the example in FIG.5, since communication has already ended for the UW and part of the frame information of the first slot at this time, data cannot be received and processing moves on to the next slot. Data discriminator 107 monitors the field strength obtained from field strength measuring device 401 together with the start of receive operation.

Next, a UW is first detected and slot synchronization performed in the following second slot. Then reception is performed for a known fixed time from the point at which slot synchronization is achieved, after which data discrimination is performed. The result of data discrimination is that the present slot is a mobile station A slot, and not a slot containing frame information, and therefore data discriminator 107 directs timing discriminator 106 to halt the receive operation until just before the UW of the next slot is received, and power supply control is performed by timing discriminator 106.

Next, power supply control signal input to radio section 101 is halted just before the UW of the third slot, as a result of which power is supplied to radio section 101 and receive operation is started, but at this time data discriminator 107 confirms by means of the signal from field strength measuring device 401 that this is an empty slot with no radio wave, and since frame information cannot be received, directs timing discriminator 106 to halt the receive operation until just before the UW of the next slot is received, and power supply control is again performed by timing discriminator 106.

Then, when the power supply starts up and receive operation is started just before the UW of the fourth slot, data discriminator 107 confirms at this time by means of the signal from field strength measuring device 401 that this is a normal slot with a radio wave, detects the UW, and performs slot synchronization again. After reception has been performed for a known fixed time, data discrimination is performed again. When the result of data discrimination confirms that the present slot is a slot containing frame information, timing discriminator 106 determines that reception is to be continued, temporarily suspends power supply control, and performs continuous reception. When reception of the data in this slot is completed and the frame information has been comprehended, timing discriminator 106 executes power supply control in accordance with bit counter 104 and slot counter 105 timing so that only reception of the necessary slot data is performed.

Thus, according to a radio communication apparatus of this embodiment, field strength is measured, and if there is an empty slot with no radio wave, data reception is not performed in that empty slot period, making it possible to eliminate needless reception in the event of an empty slot in time division multiplex communication in which the slot length and frame length are variable.

### (Embodiment 4)

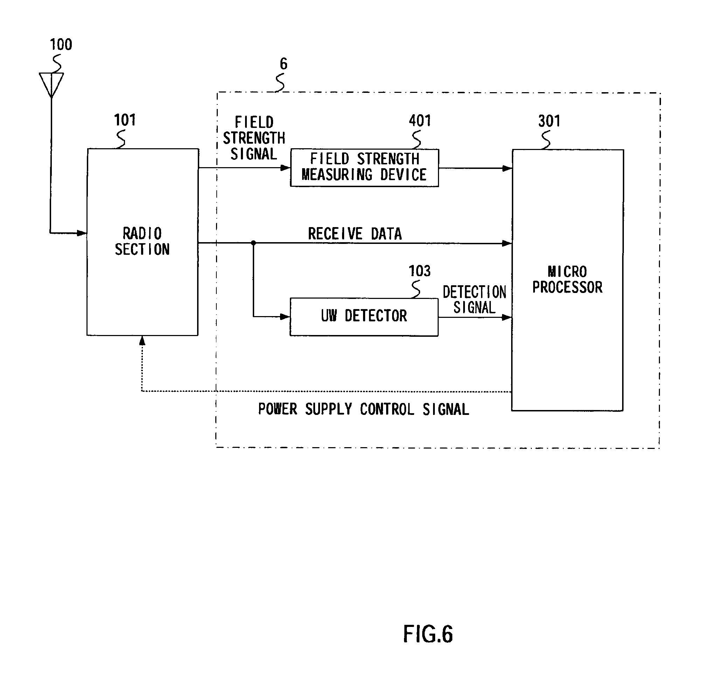

FIG.6 is a block diagram showing the configuration of a radio communication apparatus according to Embodiment 4. Parts in FIG.6 having the same function as in the radio communication apparatus according to Embodiment 3 shown in FIG.4 are assigned the same codes as in FIG.4.

A radio communication apparatus according to this embodiment performs communication by means of a time division multiplex communication method, and comprises radio section 101 and time division multiplexing synchronization apparatus 6. Time division multiplexing synchronization apparatus 6 has UW detector 103, microprocessor 301, and field strength measuring device 401, and microprocessor 301 has functions equivalent to the respective functions of receive buffer 102, bit counter 104, slot counter 105, timing discriminator 106, and data discriminator 107 provided in time division multiplexing synchronization apparatus 6 shown in FIG.4. That is to say, microprocessor 301 has a function of storing data instead of receive buffer 102, a function of measuring timing instead of bit counter 104 and slot counter 105, and a function of discriminating data location and data contents instead of timing discriminator 106 and data discriminator 107. These functions are programmed and written into internal memory or external memory of microprocessor 301.

Microprocessor 301 stores receive data output from radio section 101, and performs slot synchronization with a UW detection signal from UW detector 103 as a trigger. A timer is operated that is incremented by 1 each time a 1-bit received signal is input, and based on the value of this timer the contents of stored receive data are determined at a point in time at which reception has been completed to a certain extent, and continuous reception is performed if there is frame information, but if there is no frame information reception is suspended at that point, and operation is halted and the power supply controlled until just before the UW of the next slot. Microprocessor 301 also performs determination of signal strength from field strength measuring device 401 and determines whether or not this is an empty slot.

UW detector 103 can easily be envisaged as being able to be replaced by receive buffer operations by microprocessor 301, and eliminated. Also, if microprocessor 301 incorporates an A/D converter, field strength measuring device 401 can easily be envisaged as being able to be replaced by the incorporated A/D converter, and eliminated.

Thus, according to a radio communication apparatus of this embodiment, field strength is measured, and if there is an empty slot with no radio wave, data reception is not performed in that empty slot period, making it possible to eliminate needless reception in the event of an empty slot in time division multiplex communication in which the slot length and frame length are variable.

Also, fewer component parts are necessary than in the case of the above-described radio communication apparatus according to Embodiment 4, enabling the body of the apparatus to be made smaller and lighter.

As described above, according to the present invention, power savings are achieved and synchronization can be performed dependably with a signal from the intended station.

A time division multiplexing synchronization apparatus of the present invention is a time division multiplexing synchronization apparatus that is used in time division multiplex communication in which the slot length and frame length are fixed, and has a configuration that includes: a synchronization signal detection section that detects a synchronization signal contained in a received signal; and a synchronization section that performs continuous receive operation from the start of communication until a synchronization signal is first obtained, and when a synchronization signal is first obtained, performs slot-by-slot synchronization based on that synchronization signal, and from the next slot onward until frame information is obtained, performs receive operation only for a time in which it is possible to confirm the aforementioned frame information on a slot-by-slot basis, and halts receive operation in other periods.

A radio communication apparatus of the present invention has a configuration that includes the above-described time division multiplexing synchronization apparatus.

A time division multiplexing synchronization apparatus of the present invention is a time division multiplexing synchronization apparatus that is used in time division multiplex communication in which the slot length and frame length are variable, and has a configuration that includes: a field strength measuring section that measures a field strength signal and determines the strength of a received signal; a synchronization signal detection section that detects a synchronization signal contained in a received signal; and a synchronization section that performs continuous receive operation from the start of communication until a synchronization signal is first obtained, and, when a synchronization signal is first obtained, performs slot-by-slot synchronization based on that synchronization signal, and from the next slot onward until frame information is obtained performs receive operation only for a time in which it is possible to confirm the aforementioned frame information on a slot-by-slot basis, and halts receive operation in other periods and at the time of an empty slot that can be confirmed from the determination result of the aforementioned field strength measuring section.

A radio communication apparatus of the present invention has a configuration that includes the above-described time division multiplexing synchronization apparatus.

A synchronization method in time division multiplex communication of the present invention is a synchronization method in time division multiplex communication in which the slot length and frame length are fixed, wherein intermittent receive operation is performed at the time of frame information reception, and synchronization is performed in a receive operation period.

A synchronization method in time division multiplex communication of the present invention is a synchronization method in time division multiplex communication in which the slot length and frame length are fixed, wherein in the period from the start of communication until reception of frame information, continuous receive operation is performed until a synchronization signal is first obtained, and when a synchronization signal is first obtained, slot-by-slot synchronization is performed based on that synchronization signal, and from the next slot onward until frame information is obtained, receive operation is performed only for a time in which it is possible to confirm the aforementioned frame information on a slot-by-slot basis, and receive operation is halted in other periods.

A synchronization method in time division multiplex communication of the present invention is a synchronization method in time division multiplex communication in which the slot length and frame length are variable, wherein an empty slot is confirmed by measuring the field strength, intermittent receive operation is performed at the time of frame information reception and synchronization is performed in that receive operation period, and after synchronization is performed, receive operation is halted at the time of an empty slot.

A synchronization method in time division multiplex communication of the present invention is a synchronization method in time division multiplex communication in which the slot length and frame length are variable, wherein an empty slot is confirmed by measuring the field strength, and in the period from the start of communication until reception of frame information, continuous receive operation is performed until a synchronization signal is first obtained, and when a synchronization signal is first obtained, slot-by-slot synchronization is performed based on that synchronization signal, and from the next slot onward until frame information is obtained, receive operation is performed only for a time in which it is possible to confirm the aforementioned frame information on a slot-by-slot basis, and receive operation is halted in other periods and at the time of an empty slot.

Therefore, a time division multiplexing synchronization apparatus, radio communication apparatus, and synchronization method in time division multiplex communication according to the present invention are suitable for use as a time division multiplex communication receiving apparatus in a mobile phone or PHS (Personal Handy-phone System), and can also be applied to use as a DSRC (Dedicated Short Range Communication) communication technology such as ETC (Electronic Toll Collections System).

The present invention is not limited to the above-described embodiments, and various variations and modifications may be possible without departing from the scope of the present invention.

This application is based on Japanese Patent Application No.2004-268876 filed on September 15, 2004, the entire content of which is expressly incorporated by reference herein.

## Claims

1. A time division multiplexing synchronization apparatus used in time division multiplex communication in which a slot length and frame length are fixed, said time division multiplexing synchronization apparatus (1) comprising:
a synchronization signal detection section that detects a synchronization signal contained in a received signal (103); and
a synchronization section that performs continuous receive operation from a start of communication until a synchronization signal is first obtained, and when a synchronization signal is first obtained performs slot-by-slot synchronization based on that synchronization signal, and from a next slot onward until frame information is obtained performs receive operation only for a time in which it is possible to confirm said frame information on a slot-by-slot basis, and halts receive operation in other periods. (102, 104, 105, 106, 107)

2. A radio communication apparatus comprising the time division multiplexing synchronization apparatus according to claim 1.

3. A time division multiplexing synchronization apparatus used in time division multiplex communication in which a slot length and frame length are variable, said time division multiplexing synchronization apparatus comprising:
a field strength measuring section that measures a field strength signal and determines a strength of a received signal(401);
a synchronization signal detection section that detects a synchronization signal contained in a received signal (103); and
a synchronization section that performs continuous receive operation from a start of communication until a synchronization signal is first obtained, and when a synchronization signal is first obtained performs slot-by-slot synchronization based on that synchronization signal, and from a next slot onward until frame information is obtained performs receive operation only for a time in which it is possible to confirm said frame information on a slot-by-slot basis, and halts receive operation in other periods and at a time of an empty slot that can be confirmed from a determination result of said field strength measuring section. (102, 104, 105, 106, 107)

4. A radio communication apparatus comprising the time division multiplexing synchronization apparatus according to claim 3.

5. A synchronization method in time division multiplex communication in which a slot length and frame length are fixed, wherein intermittent receive operation is performed at a time of frame information reception, and synchronization is performed in a receive operation period.

6. A synchronization method in time division multiplex communication in which a slot length and frame length are fixed, wherein
in a period from a start of communication until reception of frame information, continuous receive operation is performed until a synchronization signal is first obtained, and
when a synchronization signal is first obtained, slot-by-slot synchronization is performed based on that synchronization signal, and from a next slot onward until frame information is obtained, receive operation is performed only for a time in which it is possible to confirm said frame information on a slot-by-slot basis, and receive operation is halted in other periods.

7. A synchronization method in time division multiplex communication in which a slot length and frame length are variable, wherein an empty slot is confirmed by measuring field strength, intermittent receive operation is performed at a time of frame information reception and synchronization is performed in that receive operation period, and after synchronization is performed, receive operation is halted at a time of an empty slot.

8. synchronization method in time division multiplex communication in which a slot length and frame length are variable, wherein an empty slot is confirmed by measuring field strength, and in a period from a start of communication until reception of frame information, continuous receive operation is performed until a synchronization signal is first obtained, and when a synchronization signal is first obtained, slot-by-slot synchronization is performed based on that synchronization signal, and from a next slot onward until frame information is obtained receive operation is performed only for a time in which it is possible to confirm said frame information on a slot-by-slot basis, and receive operation is halted in other periods and at a time of an empty slot.
